# EUROPÄISCHE PATENTSCHRIFT

(11) **EP 2 913 284 B1**
(45) Veröffentlichungstag und Bekanntmachung des Hinweises auf die Patenterteilung: **21.09.2016**
(21) Anmeldenummer: 14157281.8
(22) Anmeldetag: 28.02.2014
(51) Int. Cl.: B65G 49/04

(54) **Verfahren und Anlage zum Behandeln von Teilen**
Method and machine for treating parts
Procédé et installation de traitement de pièces

(43) Veröffentlichungstag der Anmeldung: 02.09.2015
(73) Patentinhaber: WMV Apparatebau GmbH, 51570 Windeck (DE)
(72) Erfinder: Müller, Martin, 53773 Hennef / Happerschoss (DE); Müller, Jürgen, 53757 Sankt Augustin (DE); Jongen, Hubert, 51570 Windeck (DE)
(74) Vertreter: Neumann Müller Oberwalleney & Partner Patentanwälte

(56) Entgegenhaltungen:
- EP-A2- 1 319 444
- DE-A1- 4 204 079
- US-A1- 2003 168 005

## Beschreibung

Die vorliegende Erfindung betrifft ein Verfahren zum Behandeln von Teilen mit einer Flüssigkeit. Weiterhin betrifft die vorliegende Erfindung eine Anlage zum Behandeln von Teilen in einer Flüssigkeit, umfassend ein Tauchbecken, das mit der Flüssigkeit befüllbar ist, eine um eine Drehachse drehend antreibbare Aufnahmevorrichtung zur Aufnahme der Teile, wobei die Aufnahmevorrichtung und das Tauchbecken relativ zueinander bewegbar sind, um die Teile in das Tauchbecken einzutauchen und aus diesem herauszuheben, und einen Spritzschutz.

Eine solche Anlage ist beispielsweise aus der EP 1 319 444 A2 bekannt. Die Anlage ist zum Behandeln von in Transportkörben enthaltenen Masseteilen mit einer Reinigungs-, Beschichtungs- oder Behandlungsflüssigkeit ausgebildet. Hierzu weist die Anlage ein Tauchbecken auf, das mit Flüssigkeit befüllbar ist. Oberhalb des Tauchbeckens ist ein Transportwagen angeordnet, mit dem die Transportkörbe verfahrbar sind. An dem Transportwagen ist ein Korbträger höhenverstellbar und drehend antreibbar vorgesehen. Zum Behandeln der Massenteile wird der Transportkorb in die Flüssigkeit im Tauchbecken eingetaucht. Im Anschluss daran wird der Transportkorb aus der Flüssigkeit bewegt und innerhalb des Tauchbeckens in eine Abschleuderposition gehoben. Dabei dienen hohen Seitenwandungen des Tauchbeckens als Spritzschutz, welcher die während der Rotation der Massenteile abgeschleuderte Flüssigkeit abfängt.

Als nachteilig wird empfunden, dass die bekannte Anlage und vor allem der Spritzschutz regelmäßig von den abgeschleuderten Flüssigkeiten gereinigt werden muss. Gerade bei Lacken und anderen teilweise sehr schnell aushärtenden Flüssigkeiten muss die Reinigung regelmäßig und in kurzen Intervallen vorgenommen werden, um ein Verkrusten der Anlage zu vermeiden. Dadurch ist die bekannte Anlage wartungs-und kostenaufwendig, da die Anlage händisch während erzwungener Stillstandzeiten gereinigt werden muss. Zudem wird als nachteilig empfunden, dass die von dem Spritzschutz abgefangene Flüssigkeiten bereits am Spritzschutz aushärten und im festen Zustand zurück in die Flüssigkeit fallen können, wodurch die Flüssigkeit im Tauchbecken für die weitere Behandlung von den Masseteilen unbrauchbar werden kann.

Aufgabe der vorliegenden Erfindung ist es daher, ein einfach durchzuführendes Verfahren und eine wartungsfreundliche Anlage zum Behandeln von Teilen mit einer Flüssigkeit bereitzustellen.

Die Aufgabe ist erfindungsgemäß mit einem Verfahren zum Behandeln von Teilen mit einer Flüssigkeit dadurch gelöst, das die Schritte umfasst:
- Bereitstellen eines Spritzschutzes in einem mit der Flüssigkeit gefüllten Tauchbecken;
- Eintauchen von Teilen in die Flüssigkeit;
- Bewegen der Teile aus der Flüssigkeit;
- Relatives Bewegen des Spritzschutzes gegenüber dem Tauchbecken in eine die Teile umgebende Abschleuderposition; und
- Rotieren der Teile innerhalb des Spritzschutzes; und
- Relatives Bewegen des Spritzschutzes gegenüber dem Tauchbecken in eine Tauchposition.

Mit anderen Worten handelt es sich bei dem Spritzschutz um ein eigenständiges und gegenüber dem Tauchbecken bzw. den Teilen bewegbares Bauteil. Somit kann der Spritzschutz zum einen um die Teile positioniert werden, wenn diese außerhalb der Flüssigkeit rotiert werden, und zum anderen regelmäßig zurück in die Flüssigkeit eingetaucht werden. Auf diese Weise wird verhindert, dass die vom Spritzschutz abgefangene Flüssigkeit derart lange der Umgebungsluft ausgesetzt ist, dass sie an dem Spritzschutz aushärten kann.

Erfindungsgemäß ist somit vorgesehen, den Spritzschutz gegenüber dem mit der Flüssigkeit gefüllten Tauchbecken relativ beweglich zu halten. Beispielsweise kann der Spritzschutz selbst durch geeignete Hubvorrichtungen gegenüber dem Tauchbecken bzw. den Teilen bewegt werden. Alternativ oder ergänzend kann aber auch das Tauchbecken höhenverstellbar sein, in dem es beispielsweise an einem gabelstaplerähnlichen Transportwagen gehalten und in Richtung des Spritzschutzes auf und nieder bewegbar ist. Somit kann der Spritzschutz während des Verfahrens relativ gegenüber dem Tauchbecken in eine die Teile umgebende Abschleuderposition bewegt werden. Dabei befindet sich der Spritzschutz in der Abschleuderposition, wenn der Spritzschutz die außerhalb der Flüssigkeit rotierenden Teile seitlich umschließt, um rotationsbedingt abfliegende überschüssige Flüssigkeit abzufangen. Es ist allerdings nicht notwendig, auch den Spritzschutz vollständig aus der Flüssigkeit herauszuheben. Des Weiteren wird der Spritzschutz nach der Rotation der Teile vorzugsweise wieder in die Tauchposition bewegt. Der Spritzschutz ist in der Tauchposition, wenn zumindest der Bereich des Spritzschutzes, welcher bei der Rotation der Teile die abfliegende überschüssige Flüssigkeit abfängt, in die Flüssigkeit eingetaucht ist. Vorzugsweise wird der Spritzschutz nur soweit in die Flüssigkeit eingetaucht, dass ein oberer Bereich, an dem der Spritzschutz aus der Flüssigkeit gehoben werden kann, trocken bleibt.

Bei den zu behandelnden Teilen handelt es sich insbesondere um Massenteile, beispielsweise Schrauben oder andere Kleinteile, die vor Durchführung der Behandlung in einen Materialkorb eingelegt werden. Allerdings kann es sich bei den Teilen auch um ein einzelnes Bauteil handeln, das ebenso erfindungsgemäß behandelt werden kann. Die Flüssigkeit kann eine Reinigungs-, Beschichtungs-, Behandlungs- oder Lackierflüssigkeit sein. Vorzugsweise handelt es sich bei der Flüssigkeit um eine zinkhaltige Beschichtungsflüssigkeit für den Korrosionsschutz der zu behandelnden Teile.

Vorteilhafterweise wird der Spritzschutz in der Abschleuderposition derart angeordnet, dass während der Rotation der Teile abgeschleuderte Flüssigkeit von dem Spritzschutz zurück in das Tauchbecken abtropfen kann. Auf diese Weise wird zum einen verhindert, dass die überschüssige Flüssigkeit Bereiche außerhalb des Tauchbeckens verunreinigt und zum anderen kann die zurückfließende Flüssigkeit wieder zur Behandlung der Teile verwendet werden. In bevorzugter Weise ist der Spritzschutz, wenn er sich nicht gerade in der Tauchposition befindet, stets derart angeordnet, dass die an dem Spritzschutz anhaftende Flüssigkeit zurück in das Tauchbecken abtropfen kann.

Zweckmäßigerweise wird der Spritzschutz beim Rotieren der Teile ortsfest gehalten. Somit wird verhindert, dass die an dem Spritzschutz anhaftende Flüssigkeit abgeschleudert wird und die Anlage verschmutzt.

Gemäß einem Aspekt der Erfindung ist vorgesehen, dass als weiterer Verfahrensschritt vor dem Rotieren der Teile vorgesehen ist, dass der Spritzschutz an eine Tragvorrichtung angekoppelt wird. In vorteilhafter Weise sind als weitere Verfahrensschritte nach dem Ankoppeln des Spritschutzes vorgesehen, dass ein die Koppelposition repräsentierenden Signal, dass der Spritzschutz an der Tragvorrichtung gehalten ist, erfasst wird und dass das Signal an eine Steuereinheit übermittelt wird. Somit kann das Verfahren automatisiert werden. Zweckmäßigerweise erfolgt das relative Bewegen des Spritzschutzes gegenüber dem Tauchbecken derart, dass die Tragvorrichtung und das Tauchbecken relativ zueinander bewegt werden.

In bevorzugter Weise ist vorgesehen, dass der Spritzschutz und das Tauchbecken einander in der Abschleuderposition teilweise überlappen. Hiermit ist gemeint, dass ein unterer Abschnitt des Spritzschutzes einen oberen Abschnitt des Tauchbeckens axial überdeckt. Auf diese Weise wird sicher vermieden, dass zwischen dem Spritzschutz und dem Tauchbecken überschüssige Flüssigkeit abfliegen und die Anlage verschmutzen kann.

Gemäß einem weiteren Aspekt der vorliegenden Erfindung sind als weitere Verfahrensschritte vorgesehen, dass der Spritzschutz relativ gegenüber dem Tauchbecken in eine die Teile umgebende Umwälzposition bewegt wird, in welcher der Spritzschutz zumindest teilweise aus dem Tauchbecken bewegt ist, dass die Teile und der Spritzschutz relativ gegenüber dem Tauchbecken verschwenkt werden, und dass die Teile umgewälzt werden. Im Gegensatz zum Verfahrensschritt der Rotation der Teile in der Abschleuderposition, in welchem die Teile schnell, d.h. regelmäßig mit 200 bis 300 Umdrehungen pro Minute in einer Nullstellung, d.h. entlang einer vertikalen Drehachse, rotiert werden, werden die Teile während des Umwälzens langsam, d.h. mit etwa 20 bis 30 Umdrehungen pro Minute, stufenlos in einem Winkelbereich zwischen 1 und 90 Grad, insbesondere 30, 45, 60 und 90 Grad gegenüber der Nullstellung geschwenkt rotiert. Durch die langsame Rotation in Kombination mit dem Schwenken der Teile kann die überschüssige Flüssigkeit, welche sich trotz der schnellen Rotation der Teile in eventuell vorhandenen Hohlräumen der Teile gehalten hat, abgeführt werden. In der Abschleuderposition kann der Spritzschutz somit teilweise oder vollständig aus dem Tauchbecken bewegt sein.

Ein weiterer Gegenstand der vorliegenden Erfindung ist eine Anlage zum Behandeln von Teilen in einer Flüssigkeit, bei der erfindungsgemäß eine Hubvorrichtung zum relativen Bewegen des Spritzschutzes gegenüber dem Tauchbecken und/oder der Aufnahmevorrichtung bzw. den Teilen vorgesehen ist. Die Hubvorrichtung ist derart gestaltet, dass der Spritzschutz entlang einer Hubachse axial bewegbar ist. Auf diese Weise kann der Spritzschutz angehoben und/oder abgesenkt werden. Die Hubvorrichtung kann insbesondere pneumatisch oder hydraulisch betriebene Zylinder und/oder einen Spindeltrieb und/oder einen Bowdenzug umfassen.

Vorteilhafterweise ist die Hubvorrichtung außen an dem Tauchbecken angeordnet. Somit wird verhindert, dass Fremdkörper in die Flüssigkeit gelangen.

Zweckmäßigerweise ist eine Tragvorrichtung vorgesehen, an welcher der Spritzschutz lösbar befestigbar ist, wobei die Tragvorrichtung relativ zu einem ortfesten Gestell schwenkbar ist. Durch das Ankoppeln des Spritzschutzes an die Tragvorrichtung wird eine einfach zu realisierende Möglichkeit bereitgestellt, die Teile während der Rotation und dem Umwälzen innerhalb des Spritzschutzes zu halten.

Gemäß einem Aspekt der vorliegenden Erfindung ist eine steuerbare Kupplungsvorrichtung vorgesehen und derart ausgebildet, dass der Spritzschutz an der Tragvorrichtung ankoppelbar oder von dieser abkoppelbar ist. Auf diese Weise kann der Kupplungsvorgang automatisiert werden.

In bevorzugter Weise ist vorgesehen, dass die Kupplungsvorrichtung einen Kniehebelmechanismus umfasst, um den Spritschutz selbstverriegelnd mit der Tragvorrichtung zu fixieren. Somit wird eine sicheres Halten des Spritzschutzes an der Tragvorrichtung gewährleistet.

Weiterhin kann vorgesehen sein, dass die Tragvorrichtung mit dem Spritzschutz zusammenwirkende Führungsmittel aufweist, die derart ausgebildet sind, dass der Spritzschutz konzentrisch zur Drehachse an der Tragvorrichtung befestigbar ist. Somit wird der Spritzschutz reproduzierbar in eine an der Tragvorrichtung vorgesehene Halteposition überführt.

Zweckmäßigerweise ist vorgesehen, dass der Spritzschutz rohrförmig gestaltet ist und eine größere axiale Längserstreckung aufweist als zumindest eines von dem Tauchbecken und der Aufnahmevorrichtung. Dadurch wird ein einfach herzustellender Spritzschutz bereitgestellt, der die Teile seitlich vollständig umschließt.

Vorzugsweise ist auch die Aufnahmevorrichtung an der Tragvorrichtung, an welcher der Spritzschutz befestigbar ist, lösbar befestigbar. In bevorzugter Weise ist eine steuerbare Koppelvorrichtung vorgesehen und derart ausgebildet, dass die Aufnahmevorrichtung an der Tragvorrichtung ankoppelbar und von dieser abkoppelbar ist.

Vorteilhafterweise ist vorgesehen, dass der Spritzschutz in einer Tauchposition zwischen einer umlaufenden Wandung des Tauchbeckens und der Aufnahmevorrichtung für die Teile angeordnet ist. Somit befindet sich die Aufnahmevorrichtung bereits in der Tauchposition innerhalb des Spritzschutzes, so dass vor dem Rotieren der Teile innerhalb des Spritzschutzes beide gemeinsam relativ zum Tauchbecken bewegt werden können, ohne das die relative Lage des Spritzschutzes und der Aufnahmevorrichtung verändert werden muss.

Ein bevorzugtes Ausführungsbeispiel der Erfindung wird in den Zeichnungen dargestellt und nachstehend beschrieben. Hierin zeigt.

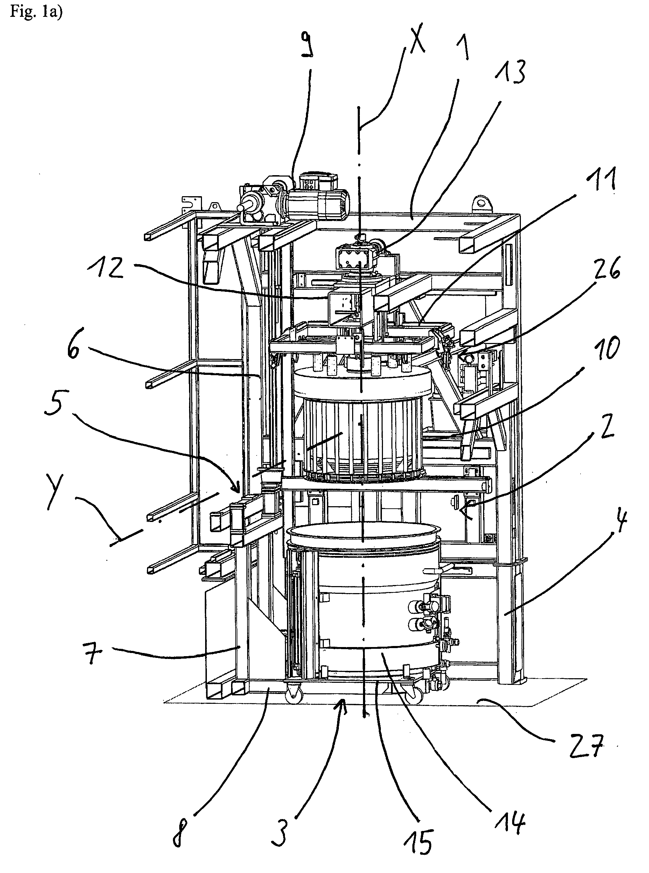

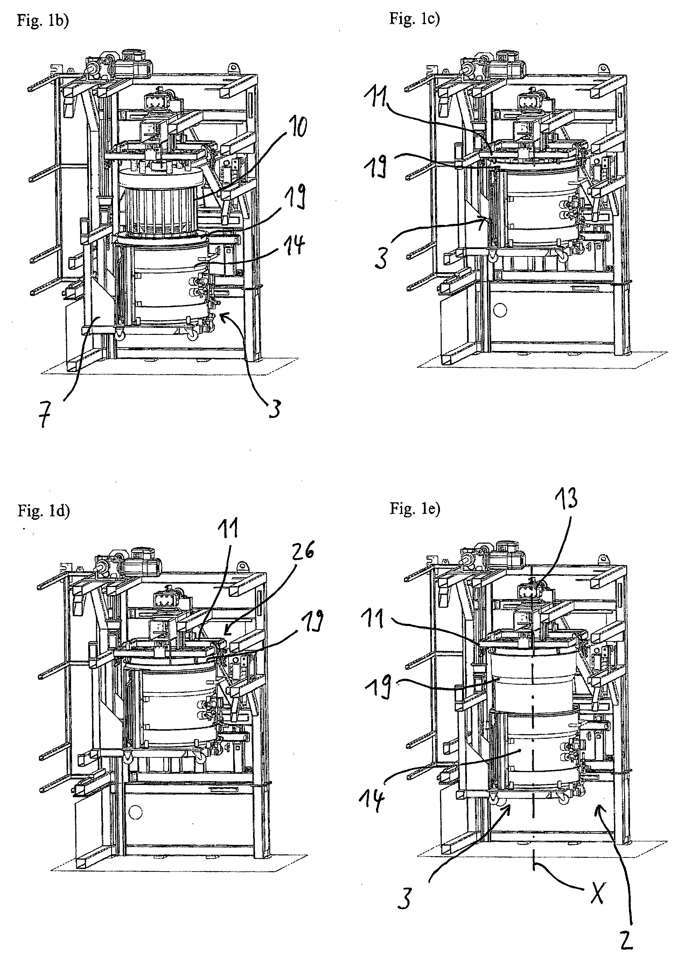

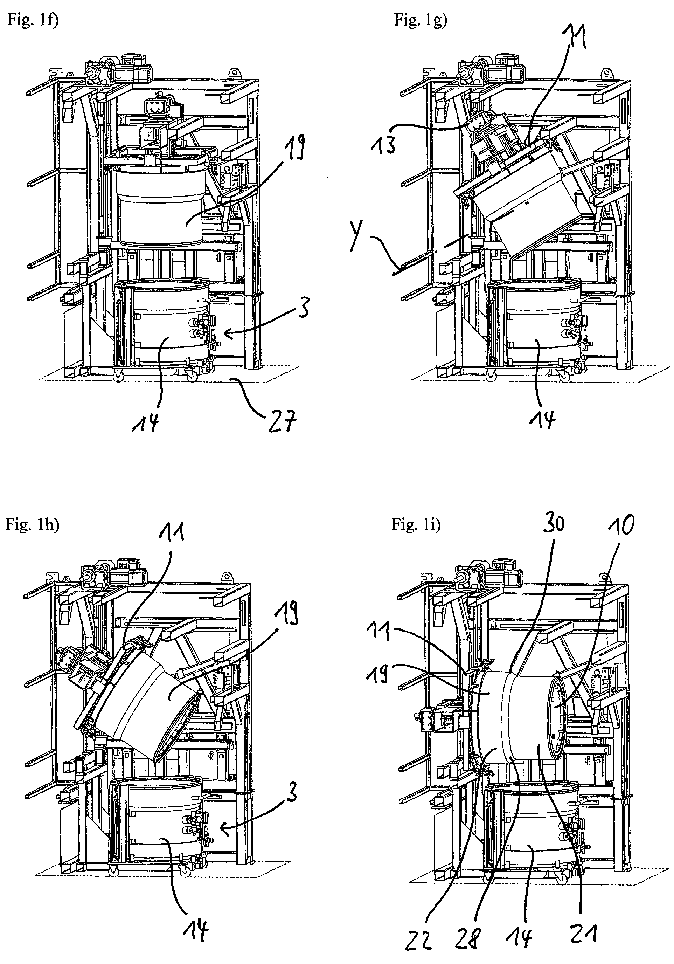

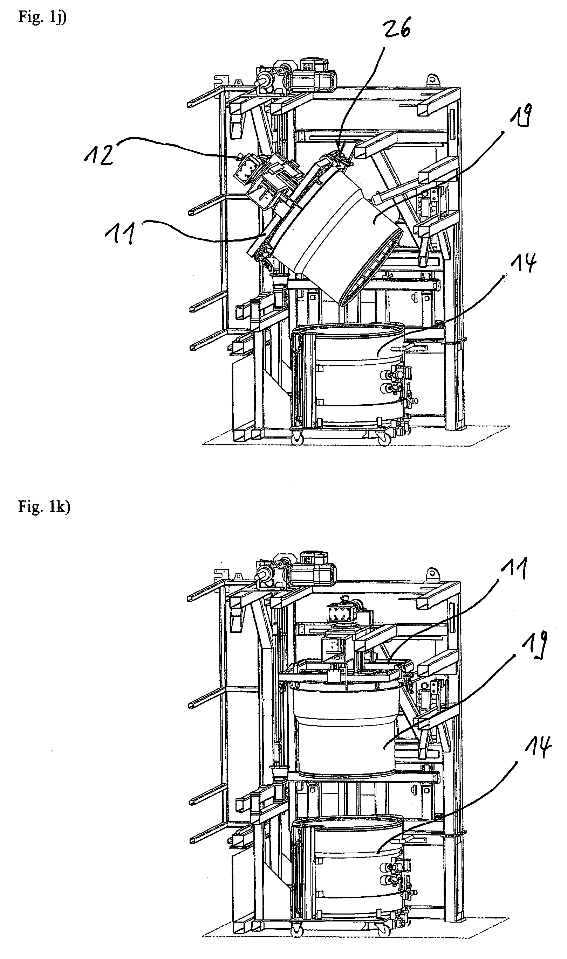

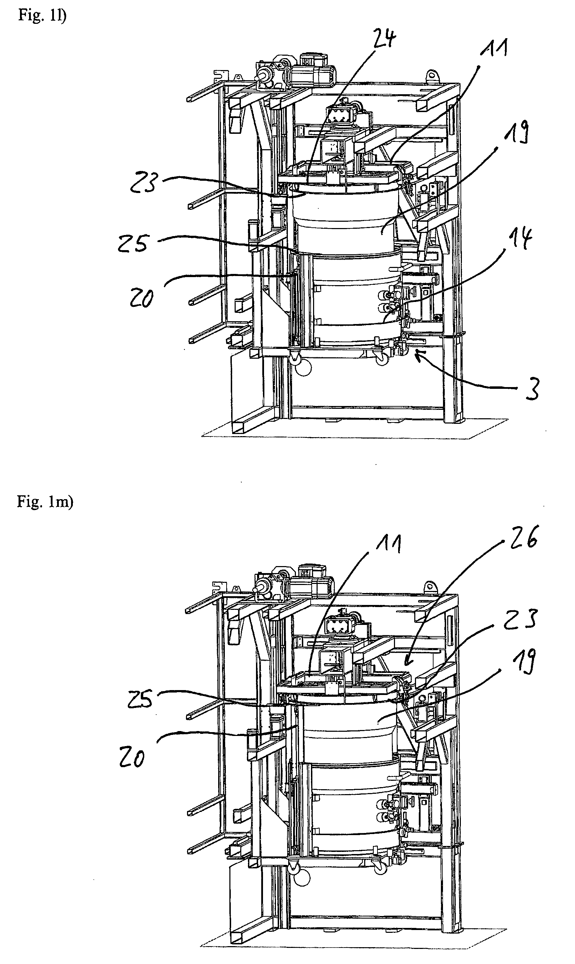

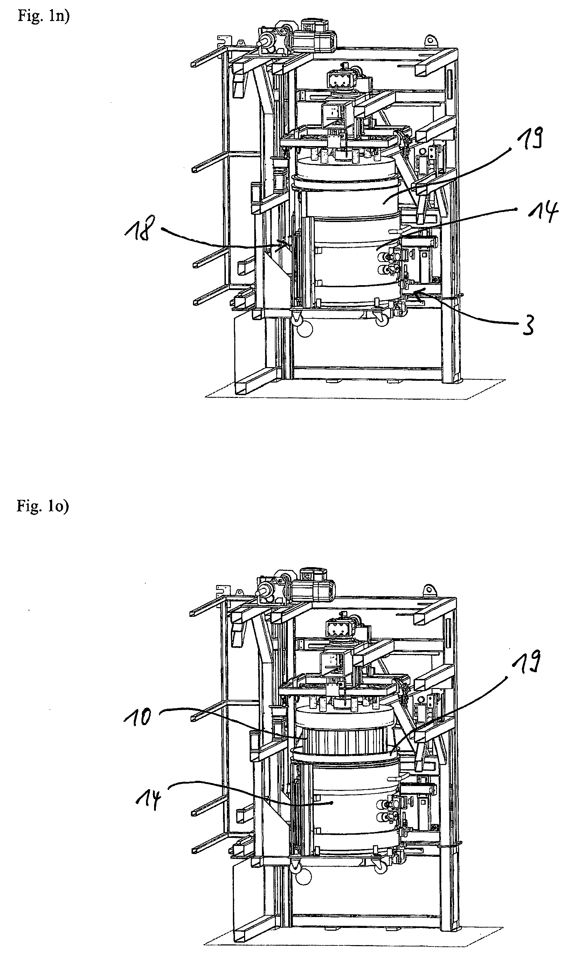

- Figur 1: eine erfindungsgemäße Anlage gemäß einer Ausführungsform in einer teilweise geschnittenen, perspektivischen Darstellung
a) in einer Grundstellung,
b) in einer Zwischenstellung,
c) in einer Tauchstellung,
d) in einer Ankoppelstellung,
e) in einer Abschleuderstellung,
f) in einer weiteren Zwischenstellung,
g) in einer ersten Umwälzstellung,
h) in einer zweiten Umwälzstellung,
i) in einer dritten Umwälzstellung,
j) in einer vierten Umwälzstellung,
k) in einer fünften Umwälzstellung,
l) in einer ersten Abkoppelstellung,
m) in einer zweiten Abkoppelstellung,
n) in einer dritten Abkoppelstellung, und
o) in einer vierten Abkoppelstellung;

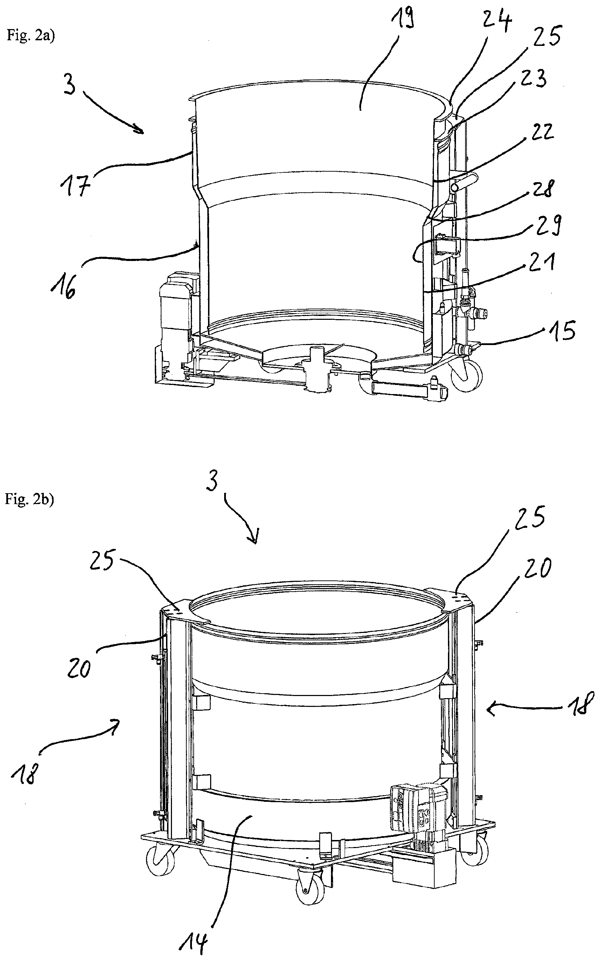

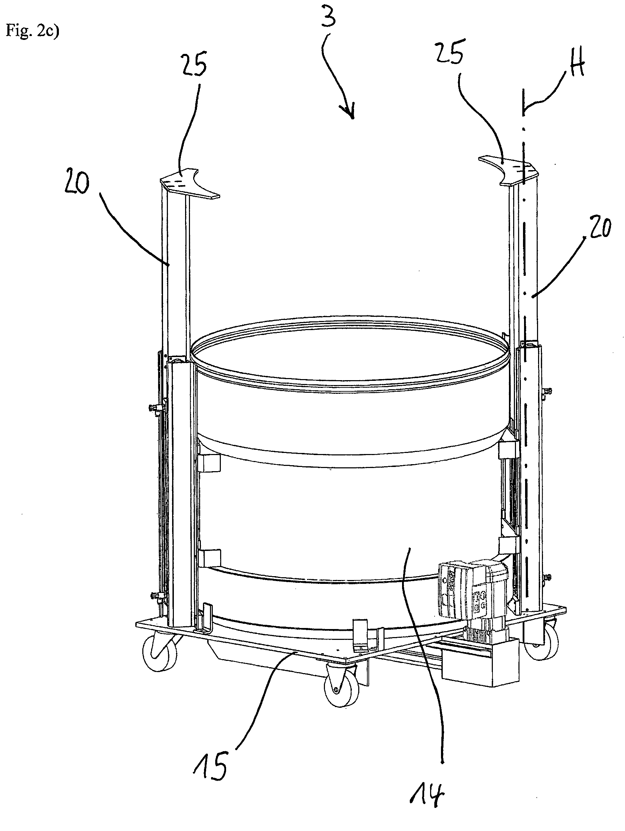

- Figur 2: eine vergrößerte Teilansicht eines Lackwagens der Anlage aus Figur 1
a) in einer teilweise geschnittenen, perspektivischen Darstellung mit dem Spritzschutz in einer Tauchposition, wobei sich die Anlage in der Grundstellung gemäß der Figur 1 a) befindet,
b) in einer perspektivischen Darstellung mit eingefahrenen Hubzylindern, und
c) in einer perspektivischen Darstellung mit ausgefahrenen Hubzylindern;
- Figur 3: eine vergrößerte Teilansicht eines Spritzschutzes der Anlage gemäß Figur 1 in einer teilweise geschnittenen, perspektivischen Darstellung mit dem Spritzschutz in der Tauchposition, wobei sich die Anlage in der Tauchstellung gemäß der Figur 1 c) befindet;
- Figur 4: eine vergrößerte Teilansicht einer Kupplungsvorrichtung der Anlage aus Figur 1 in einer teilweise, geschnittenen perspektivischen Darstellung
a) im geöffneten Zustand, und
b) im geschlossenen Zustand.

Die Zeichnung zeigt eine erfindungsgemäße Anlage zum Behandeln von Teilen mit einer Flüssigkeit gemäß einer Ausführungsform. Die Anlage ist hier als Tauch-Umwälz-Lackier-Zentrifuge ausgelegt und dient zur Beschichtung von Massenteilen, beispielsweise Schrauben oder anderen Kleinteilen, mit einer zinkhaltigen Flüssigkeit.

In der in Figur 1 a) gezeigten Grundstellung ist erkennbar, dass die Anlage ein ortsfestes Gestell 1 aufweist, das einen Arbeitsraum 2 umschließt. Im Arbeitsraum 2 ist ein Lackwagen 3 positioniert, der über eine seitliche Öffnung 4 mit einem nicht dargestellten Tor in den Arbeitsraum 2 herein- und herausgeschoben werden kann. Um den Lackwagen 3 anheben bzw. absenken zu können, ist am Gestell 1 eine Hebeeinrichtung 5 angebracht. Die Hebeeinrichtung 5 umfasst zwei vertikal verlaufende Führungsschienen 6, an denen analog zu einem herkömmlichen Gabelstapler eine Gabel 7 mit zwei Zinken 8 höhenverstellbar geführt ist, die mittels eines Elektromotors 9 verstellbar ist.

Oberhalb des Lackwagens 3 ist ein Materialkorb 10 angeordnet, in den die zu behandelnden Teile einbringbar sind. Der Materialkorb 10 ist um eine Drehachse X drehend antreibbar an einer Tragvorrichtung lösbar befestigt, die in Form eines Schwenkrahmens 11 gestaltet ist. Ein weiterer Elektromotor 13 ist vorgesehen und ausgebildet, um den Materialkorb 10 um die Drehachse X zu drehen. Der Schwenkrahmen 11 ist an einem Schwenkbalken 12 des ortsfesten Gestells 1 schwenkbar gehalten und kann um eine Schwenkachse Y in einem Winkelbereich von 0 bis 90 Grad hydraulisch geschwenkt werden. Über eine hier nicht dargestellte Transporteinheit kann der Arbeitsraum 2 mit dem Materialkorb 10 bestückt werden.

Der Lackwagen 3 umfasst ein Tauchbecken 14, welches auf einem Rollwagen 15 montiert ist. In der Figur 2a) ist erkennbar, dass das Tauchbecken 14 gestuft ausgebildet ist und einen unteren Bereich 16 und einen oberen Bereich 17 aufweist. Der untere Bereich 16 erstreckt sich über etwa zwei Drittel der Höhe des Tauchbeckens 14 und ist im Betrieb der Anlage mit der Flüssigkeit befüllt. Der obere Bereich 17 des Tauchbeckens 14 weist einen etwas größeren Durchmesser als der untere Bereich 16 auf, um die beim Eintauchen des Materialkorbes 10 in das Tauchbecken 14 verdrängte Flüssigkeit in dem Tauchbecken 14 zurückzuhalten. In den Figuren 2a) bis 2c) ist erkennbar, das an dem Lackwagen 3 außenseitig eine Hubvorrichtung 18 zum axialen Bewegen eines Spritzschutzes 19, welcher in den Figuren 2b) und 2c) nicht dargestellt ist, gegenüber dem Materialkorb 10 angeordnet ist. Konkret sind an diametral gegenüberliegenden Außenseiten des Lackwagens 3 außerhalb des Tauchbeckens 14 zwei synchron verfahrbare Hubzylinder 20 vorgesehen, die den Spritzschutz 19 entlang einer Hubachse H bewegen können.

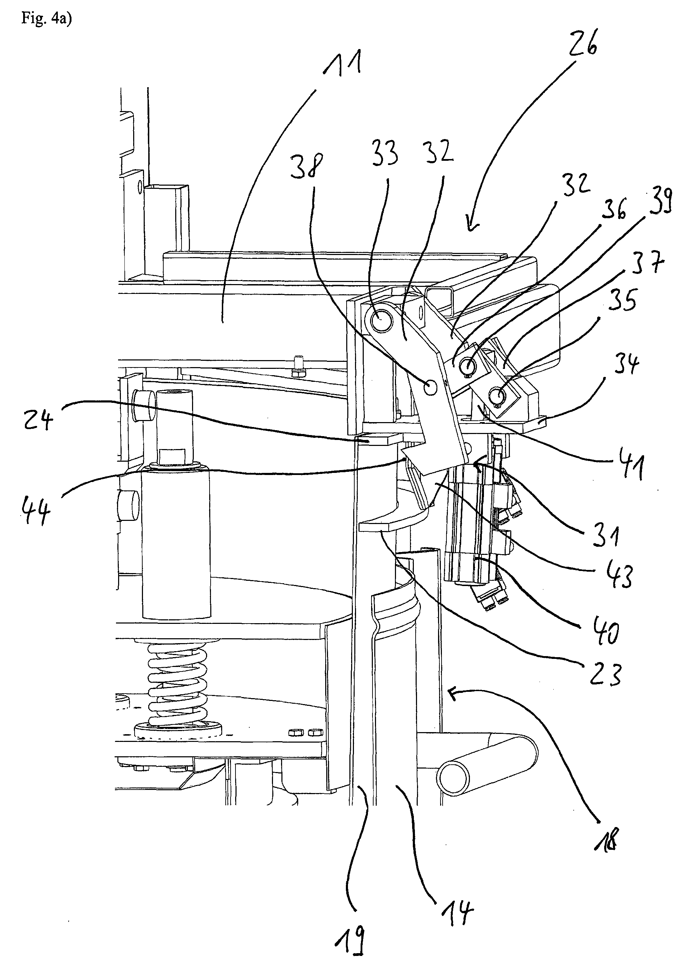

In der Figur 2a) ist der bewegbar ausgebildete Spritzschutz 19 erkennbar. Der Spritzschutz 19 ist aus Edelstahl hergestellt, wobei dieser ebenso aus einem Kunststoff gefertigt sein kann. Der Spritzschutz 19 weist eine rohr- oder hülsenförmige Grundform auf und ist korrespondierend zu dem Tauchbecken 14 ebenfalls gestuft ausgebildet. Ein unterer Bereich 21, der sich über etwa zwei Drittel der Höhe des Spritzschutzes 19 erstreckt, weist einen etwas kleineren Durchmesser als ein oberer Bereich 22 auf. An dem zum Schwenkrahmen 11 weisenden oberen Endbereich sind zwei ringförmige Kragen 23, 24 ausgebildet. Der untere der beiden Kragen 23 wirkt in der in Figur 2a) gezeigten Tauchposition des Spritzschutzes 19 mit der Hubvorrichtung 18 zusammen. Konkret tragen die beiden Hubzylinder 20 an deren freien Enden jeweils eine zu dem Außenumfang des Spritzschutzes 19 korrespondierende Stützplatte 25, deren Innenradius zumindest im Wesentlichen dem Außenradius des Spritzschutzes 19 entspricht. In der Tauchposition liegt der untere Kragen 23 des Spritzschutzes 19 bereichsweise auf den beiden Stützplatten 25 auf. Durch die innen konkave Ausgestaltung der Stützplatten 25 stützt sich der Spritzschutz 19 in der Tauchposition zudem radial an diesen ab, wodurch der Spritzschutz 19 in dem Tauchbecken 14 geführt ist. Über den oberen Kragen 24 kann der Spritzschutz 19 an einer an dem Schwenkrahmen 11 angeordneten steuerbaren Kupplungsvorrichtung 26 lösbar befestigt werden. Die genaue Funktionsweise der Kupplungsvorrichtung 26 wird im Einzelnen im Zusammenhang mit den Figuren 4a) und 4b) später beschrieben.

In den Figuren 1 a) bis 1o) sind die einzelnen Verfahrensschritte in chronologischer Abfolge dargestellt, auf welche im Folgenden näher eingegangen wird:
In der in Figur 1a) gezeigten Grundstellung steht der mit der Flüssigkeit gefüllte Lackwagen 3 auf einem Boden 27 des Arbeitsraumes 2 und ist auf die Zinken 8 der Gabel 7 aufgeschoben. Der Spritzschutz 19 befindet sich in Tauchposition, d.h. der Spritzschutz 19 ist in dem Tauchbecken 14 angeordnet und mit dessen unteren Bereich 16 in die Flüssigkeit eingetaucht. Der Materialkorb 10 ist mit den zu behandelnden Teilen befüllt und steht in dessen Nullstellung, in welcher der Schwenkrahmen 11 gegenüber dem ortsfesten Gestell 1 nicht geschwenkt ist. Die Kupplungsvorrichtung 26 des Schwenkrahmens 11 ist für die Aufnahme des Spritzschutzes 19 geöffnet, so dass im Weiteren Verfahren der Spritzschutz 19 bis an den Schwenkrahmen 11 herangefahren werden kann.

Die Figur 1b) zeigt eine Zwischenstellung, in welcher der auf der Gabel 7 aufsitzende Lackwagen 3 in Richtung des Materialkorbs 10 axial nach oben gefahren wird. Der sich weiterhin in der Tauchposition befindliche Spritzschutz 19 wird auf diese Weise zum Materialkorb 10 hinbewegt, ohne das die relative Position des Spritzschutzes 19 gegenüber dem Tauchbecken 14 verändert wird.

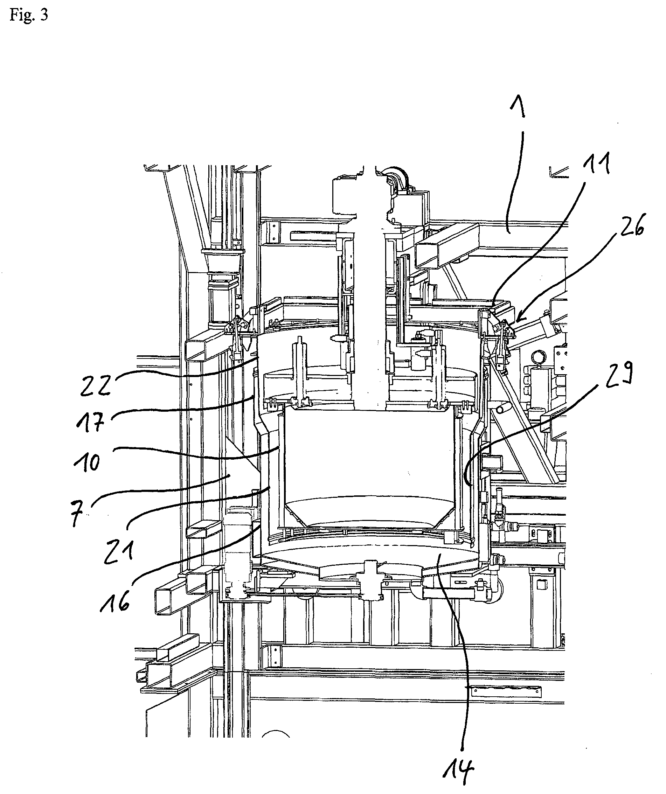

In der Figur 1c) ist die Anlage in deren Tauchstellung dargestellt. Der Lackwagen 3 ist vollständig nach oben gefahren und der Spritzschutz 19 mit dessen zu dem Schwenkrahmen 11 weisenden Stirnseite mit dem Schwenkrahmen 11 in Anlage gebracht. Der Materialkorb 10 ist in die Flüssigkeit im Tauchbecken 8 eingetaucht, wodurch der sich weiterhin in der Tauchposition befindliche Spritzschutz 19 nun zwischen einer inneren Wandung des Tauchbeckens 14 und dem Materialkorb 10 positioniert ist. In der Figur 3 ist erkennbar, dass der Materialkorb 10 in der Tauchstellung in den unteren Bereich 21 des Spritzschutzes 19 und einen sich an diesen anschließenden Übergangsbereich 28, der zwischen dem unteren und dem oberen Bereich 21, 22 des Spritzschutzes 19 liegt, eingreift. Während der noch folgenden Rotation der Teile um die Drehachse X wird die Innenfläche des Spritzschutzes 19 hauptsächlich in dem unteren Bereich 21 und dem Übergangsbereich 28 von den Teilen abgeschleuderte überschüssige Flüssigkeit auffangen, so dass diese Bereiche 21, 28 des Spritzschutzes 19 im Weiteren als Auffangfläche 29 bezeichnet wird.

Die Figur 1d) zeigt eine Ankoppelstellung, in welcher die steuerbare Kupplungsvorrichtung 26 geschlossen ist und den Spritzschutz 19 an dem Schwenkrahmen 11 fixiert. Wenn der Spritzschutz 19 in der Ankoppelstellung sicher an der Kupplungsvorrichtung 26 gehalten ist, wird ein die Koppelposition repräsentierendes Signal von einem nicht dargestellten Signalgeber erzeugt, welches an eine ebenfalls nicht dargestellte Steuereinheit übermittelt wird.

Sobald die Steuereinheit die sichere Kopplung des Spritzschutzes 19 am Schwenkrahmen 11 registriert hat, wird der Lackwagen 3 in die in der Figur 1e) gezeigten Abschleuderstellung abgesenkt. Auf diese Weise wird der Materialkorb 10 und der Spritzschutz 19 aus der Flüssigkeit herausbewegt. Allerdings wird der Lackwagen 3 nur soweit abgesenkt, dass der an dem Schwenkrahmen 11 ortsfest gehaltene Spritzschutz 19 und das Tauchbecken 14 noch einander teilweise überlappen. In der Abschleuderstellung wird der Materialkorb 10 innerhalb des Spritzschutzes 19 mittels des Elektromotors 13 mit etwa 300 Umdrehungen pro Minute um die Drehachse X rotiert. Durch die rotationsbedingt auf die Teile wirkende Zentrifugalkraft wird die überschüssige Flüssigkeit von den Teilen abgeschleudert. Die abgeschleuderte Flüssigkeit wird von dem ortsfest gehaltenen Spritzschutz 19 im Bereich der Auffangfläche 29 abgefangen. Durch die teilweise Überlappung des Spritzschutzes 19 und des Tauchbeckens 14 kann zum einen die abgeschleuderte Flüssigkeit und zum anderen die durch das Eintauchen des Spritzschutzes 19 an diesem auch außenseitig anhaftende Flüssigkeit direkt zurück in das Tauchbecken 14 abtropfen. Darüber hinaus wird verhindert, dass der Arbeitsraum 2 durch die abgeschleuderte Flüssigkeit verschmutzt wird. Nach einer definierten Zeit wird die Rotation des Materialkorbs 10 wieder beendet. Durch die Positionierung des Materialkorbes 10 innerhalb des Spritzschutzes 19 versteht sich von selbst, dass auch von dem Materialkorb 10 selbst nach unten abtropfende Flüssigkeit direkt in das Tauchbecken 14 gelangt.

In der in Figur 1f) gezeigten weiteren Zwischenstellung ist der Lackwagen 3 wieder in dessen Grundstellung zurück auf den Boden 27 der Anlage abgesenkt. Es ist erkennbar, dass das Tauchbecken 14 auch in dieser Stellung stets derart unterhalb des Spritzschutzes 19 angeordnet ist, dass von dem Spritzschutz 19 abtropfende Flüssigkeit direkt in das Tauchbecken 14 abtropfen kann.

Anschließend wird der Schwenkrahmen 11 um die Schwenkachse Y aus der Nullstellung verschwenkt. In den Figuren 1g) bis 1i) sind beispielhaft drei Umwälzstellungen gezeigt. Der Schwenkrahmen 11 kann stufenlos zwischen 0 Grad und 90 Grad geschwenkt werden, wobei während der Umwälzung der Teile entweder nur eine oder wahlweise auch mehrere Umwälzstellungen angefahren werden können. Dabei ist der Lackwagen 3 in sämtlichen Umwälzstellungen stets derart unterhalb des Spritzschutzes 19 angeordnet, dass die von dem Spritzschutz 19 abgefangene Flüssigkeit direkt in das Tauchbecken 14 abtropfen kann. In der Figur 1g) ist der Schwenkrahmen 11 um etwa 30 Grad aus der Nullstellung geschwenkt angeordnet. In den Figuren 1h) bzw. 1i) ist der Schwenkrahmen 11 um 60 Grad bzw. 90 Grad aus der Nullstellung verschwenkt. In den Umwälzstellungen wird der Materialkorb 10 durch den Elektromotor 13 mit etwa 20 bis 30 Umdrehungen pro Minute rotiert. Dabei werden die Teile innerhalb des Materialkorbs 10 ständig umgewälzt, wobei beispielsweise innere Rippen im Materialkorb 10 den Umwälzvorgang weiter verstärken können. Auf diese Weise kann eventuell überschüssige Flüssigkeit, welche sich trotz des Abschleudern weiter in Löchern, Schlitzen oder sonstigen Einbuchtungen der Teile gehalten hat, abtropfen. Durch die Aufweitung des Spritzschutzes 19 zwischen dem unteren und dem oberen Bereich 21, 22 ist im Übergangsbereich 28 eine umlaufende äußere Abtropfkante 30 gebildet, über welche auch bei der um 90 Grad geschwenkten dritten Umwälzstellung die durch das Eintauchen des Spritzschutzes 19 in die Flüssigkeit auch außenseitig am Spritzschutz 19 anhaftende Flüssigkeit stets zurück in das Tauchbecken 14 abtropft.

In der Figur 1j) ist eine vierte Umwälzstellung gezeigt, in welcher der Schwenkrahmen 11 den Materialkorb 10 und den Spritzschutz 19 zurück in die Nullstellung überführt wird. In dieser vierten Umwälzstellung ist der Schwenkrahmen 11 um etwa 45 Grad aus der Nullstellung geschwenkt. Der Materialkorb 10 kann weiter langsam rotiert werden oder bereits gestoppt worden sein.

In der fünften Umwälzstellung gemäß der Figur 1k) ist der Materialkorb 10 und der Spritzschutz 19 zurück in die Nullstellung überführt. In dieser Stellung kann der Materialkorb 10 weiter langsam rotiert werden oder bereits ruhen.

In der Figur 1l) ist eine erste von vier Abkoppelstellungen gezeigt, in welcher der Spritzschutz 19 zurück in das Tauchbecken 14 bewegt wird. Der Lackwagen 3 wird zunächst in eine der Abschleuderstellung entsprechenden Höhe positioniert. Entscheidend hierbei ist, dass der Materialkorb 10 nicht zurück in die Flüssigkeit eingetaucht wird, um ein erneutes Eintauchen der Teile in die Flüssigkeit zu verhindern.

Um aus dieser von dem Schwenkrahmen 11 beabstandeten Stellung des Lackwagens 3 den Spritzschutz 19 zurück in das Tauchbecken 14 fahren zu können, werden die beiden pneumatisch betätigten Hubzylinder 20 synchron in Richtung des Spritzschutzes 19 ausgefahren. In der in Figur 1m) gezeigten zweiten Abkoppelstellung sind die beiden Zylinder 20 bereits vollständig ausgefahren. Die gebogenen Stützplatten 25 der Hubzylinder 20 sind von unten an den unteren Kragen 23 des Spritzschutzes 19 herangefahren. Sobald die beiden Hubzylinder 20 den Spritzschutz 19 stützen, wird ein entsprechendes Signal an die Steuerung übermittelt. Die Steuerung gibt daraufhin die Kupplungsvorrichtung 26 frei, woraufhin der Spritzschutz 19 von dem Schwenkrahmen 11 abgekoppelt wird.

In der in Figur 1n) gezeigten dritten Abkoppelstellung ist der Spritzschutz 19 bereits über die Hubvorrichtung 18 des Lackwagens 3 in Richtung des Tauchbeckens 14 abgesenkt.

In der in Figur 1o) gezeigten vierten Abkoppelstellung ist der Spritzschutz 19 wieder in dessen Tauchposition zurückgeführt. Der Spritzschutz 19 ist somit wieder in das Tauchbecken 14 abgesenkt, wobei zumindest die Auffangfläche 29 und die mit der Auffangfläche 29 deckungsgleiche Außenfläche des Spritzschutzes 19 vollständig in die Flüssigkeit eingetaucht ist.

Schließlich wird der Lackwagen 3 wieder in die Grundstellung gemäß der Figur 1a) auf den Boden 27 des Arbeitsraumes 2 abgesenkt.

Im Anschluss daran kann der Materialkorb 10 und gegebenenfalls auch der Lackwagen 3 aus dem ortsfesten Gestell 1 herausgefahren werden, um diese neu zu befüllen oder gegen einen bereits neu befüllten weiteren Materialkorb 10 bzw. einen weiteren Lackwagen 3 auszutauschen.

Im Weiteren wird die Funktionsweise der Kupplungsvorrichtung 26 anhand der beiden Figuren 4a) und 4b) näher beschrieben:

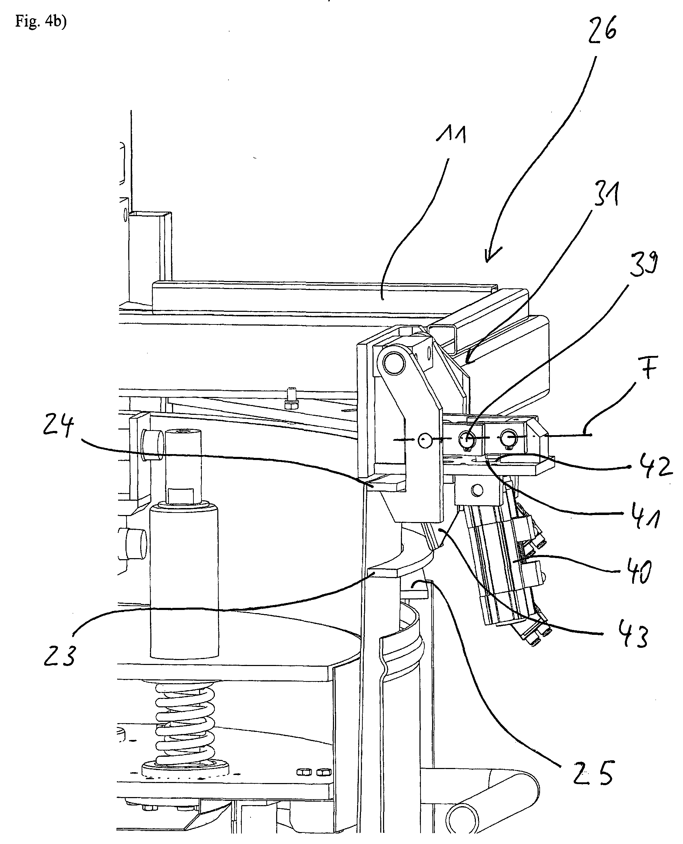

In der Figur 4a) ist die Kupplungsvorrichtung 26 in deren geöffneten Zustand dargestellt, in welchem der Spritzschutz 19 bis an den Schwenkrahmen 11 herangefahren werden kann. In der Figur 4b) ist die Kupplungsvorrichtung 26 geschlossen, so dass der Spritzschutz 19 an dem Schwenkrahmen 11 fixiert ist und die Hubvorrichtung 18 wieder abgesenkt werden kann.

Konkret weist die Kupplungsvorrichtung 26 zwei hydraulisch betätigbare Kniehebelgreifer 31 eines Kniehebelmechanismus auf, die seitlich an dem Schwenkrahmen 11 angeordnet sind. Jeder Kniehebelgreifer 31 umfasst zwei Greifelemente 32, die an dem Schwenkrahmen 11 über jeweils einen ersten Drehpunkt 33 drehbar gehalten sind. Unterhalb der ersten Drehpunkte 33 ragt jeweils eine Platte 34 seitlich von dem Schwenkrahmen 11 ab, welche die weiteren Elemente des Kniehebelmechanismus trägt. Über einen zweiten Drehpunkt 35 sind die Greifelemente 32 an der jeweiligen Platte 34 drehbar gehalten. Jedes der Greifelemente 32 ist über einen ersten Schenkel 36 und einen zweiten Schenkel 37 mit dem zweiten Drehpunkt 35 drehbar verbunden. Jeder der ersten Schenkel 36 ist an einem Endbereich 38 mit dem jeweiligen Greifelement 32 drehbar und an einem weiteren Endbereich mit dem jeweiligen zweiten Schenkel 37 über einen dritten Drehpunkt 39 drehbar verbunden. In der Figur 4b) ist erkennbar, dass die drehbare Verbindung 38 zwischen den ersten Schenkeln 36 und den Greifelementen 32 zusammen mit dem zweiten Drehpunkt 35 in der angekoppelten Stellung auf einer Fluchtlinie F liegen. Sobald der dritte Drehpunkt 39 auf bzw. knapp unterhalb dieser Fluchtlinie F liegt, ist der Totpunkt des Kniehebelmechanismus erreicht bzw. überschritten. Auf diese Weise sind die Kniehebelgreifer 31 selbsthemmend arretiert und können lediglich durch Aufbringung einer axial nach oben wirkenden Kraft auf den dritten Drehpunkt 39 geöffnet werden. Hierzu ist jeweils ein pneumatischer Zylinder 40 vorgesehen, dessen Kolben 41 mit den zugeordneten ersten und zweiten Schenkeln 36, 37 am dritten Drehpunkt 39 drehbar verbunden ist. Die Zylinder 40 sind jeweils an der Unterseite der Platten 34 angebracht und greifen durch eine Öffnung 42 durch die Platte 34. Wenn der Kolben 41 gemäß der in Figur 4a) gezeigten Stellung ausgefahren ist, wird der jeweilige Kniehebelmechanismus aus seinem Totpunkt gedrückt und die Greifelemente 32 von dem oberen Kragen 24 des Spritzschutzes 19 nach außen wegbewegt.

Damit der Spritzschutz 19 die für die Koppelung mit der Kupplungsvorrichtung 26 vorgesehene Position am Schwenkrahmen 11 stets exakt erreicht, wird der Spritzschutz 19 beim Hochfahren des Tauchbeckens 14 in die Tauchstellung über mehrere Zentrierelemente 43 konzentrisch zur Drehachse X am Schwenkrahmen 11 positioniert. Konkret sind die Zentrierelemente 43 jeweils an der Unterseite der Platten 34, an denen auch Teile der Kupplungsvorrichtung 26 gehalten sind, angeordnet. An zu den Platten 34 weisenden gehaltenen Endbereichen der Zentrierelemente 43 verlaufen deren zueinander weisenden Innenflächen 44 gerade, d.h. parallel zu der Drehachse X. Der Abstand der beiden Innenflächen 44 zueinander entspricht zumindest annähernd dem Außendurchmesser des oberen Kragens 24. An deren nach unten weisenden freien Endbereichen sind die Zentrierelemente 43 schräg ausgebildet, so dass deren Innenflächen 44 um etwa 30° radial nach außen weglaufen. Durch die schräge Ausbildung der freien Endbereiche der Zentrierelemente 43 wird der Spritzschutz 19 beim Hochfahren stets in seine vorgesehene Ankoppelstellung geführt und zentriert. Die geraden Endbereiche der Zentrierelemente 43 übernehmen zusätzlich zu ihrer Führungsfunktion beim Ankoppeln des Spritzschutzes 19 eine Stützfunktion in radialer Richtung. Konkret liegt der Spritzschutz 19 in der Ankoppelstellung mit seinem oberen Kragen 24 bündig an den Zentrierelementen 43 in deren geraden Bereichen an, so dass beim Verschwenken des Schwenkrahmens 11 der Spritzschutz 19 sich an den Zentrierelementen 43 abstützt. Insofern können die Zentrierelemente 43 auch als Stützelemente bezeichnet werden.

### Bezugszeichenliste

- 1: Ortsfestes Gestell
- 2: Arbeitsraum
- 3: Lackwagen
- 4: Öffnung
- 5: Hebeeinrichtung
- 6: Führungsschienen
- 7: Gabel
- 8: Zinken
- 9: Elektromotor
- 10: Materialkorb
- 11: Schwenkrahmen
- 12: Schwenkbalken
- 13: Elektromotor
- 14: Tauchbecken
- 15: Rollwagen
- 16: Unterer Bereich
- 17: Oberer Bereich
- 18: Hubvorrichtung
- 19: Spritzschutz
- 20: Hubzylinder
- 21: Unterer Bereich
- 22: Oberer Bereich
- 23: Unterer Kragen
- 24: Oberer Kragen
- 25: Stützplatte
- 26: Kupplungsvorrichtung
- 27: Boden
- 28: Übergangsbereich
- 29: Auffangfläche
- 30: Abtropfkante
- 31: Kniehebelgreifer
- 32: Greiferelement
- 33: Erster Drehpunkt
- 34: Platte
- 35: Zweiter Drehpunkt
- 36: Erster Schenkel
- 37: Zweiter Schenkel
- 38: Drehfeste Verbindung
- 39: Dritter Drehpunkt
- 40: Zylinder
- 41: Kolben
- 42: Öffnung
- 43: Zentrierelemente
- 44: Innenfläche
- F: Fluchtlinie
- H: Hubachse
- X: Drehachse
- Y: Schwenkachse

## Patentansprüche

1. Verfahren zum Behandeln von Teilen mit einer Flüssigkeit, umfassend die Schritte:
- Bereitstellen eines Spritzschutzes (19) in einem mit der Flüssigkeit gefüllten Tauchbecken (14);
- Eintauchen von Teilen in die Flüssigkeit;
- Bewegen der Teile aus der Flüssigkeit;
- Relatives Bewegen des Spritzschutzes (19) gegenüber dem Tauchbecken (14) in eine die Teile umgebende Abschleuderposition; und
- Rotieren der Teile innerhalb des Spritzschutzes (19); und
- Relatives Bewegen des Spritzschutzes (19) gegenüber dem Tauchbecken (14) in eine Tauchposition.

2. Verfahren nach Anspruch 1,
**dadurch gekennzeichnet,**
**dass** der Spritzschutz (19) in der Abschleuderposition derart angeordnet wird, dass während der Rotation der Teile abgeschleuderte Flüssigkeit von dem Spritzschutz (19) zurück in das Tauchbecken (14) abtropfen kann.

3. Verfahren nach einem der vorherigen Ansprüche,
**dadurch gekennzeichnet,**
**dass** der Spritzschutz (19) beim Rotieren der Teile ortsfest gehalten wird.

4. Verfahren nach einem der vorherigen Ansprüche,
**dadurch gekennzeichnet,**
**dass** als weiterer Verfahrensschritt vor dem Rotieren der Teile vorgesehen ist:
- Ankoppeln des Spritzschutzes (19) an eine Tragvorrichtung (11).

5. Verfahren nach Anspruch 4,
**dadurch gekennzeichnet,**
**dass** als weitere Verfahrensschritte nach dem Ankoppeln des Spritschutzes (19) vorgesehen sind:
- Erfassen eines die Koppelposition repräsentierenden Signals, dass der Spritzschutz (19) an der Tragvorrichtung (11) gehalten ist;
- Übermitteln des Signals an eine Steuereinheit.

6. Verfahren nach Anspruch 4 oder 5,
**dadurch gekennzeichnet,**
**dass** das relative Bewegen des Spritzschutzes (19) gegenüber dem Tauchbecken (14) derart erfolgt, dass die Tragvorrichtung (11) und das Tauchbecken (14) relativ zueinander bewegt werden.

7. Verfahren nach einem der vorherigen Ansprüche,
**dadurch gekennzeichnet,**
**dass** der Spritzschutz (19) und das Tauchbecken (14) einander in der Abschleuderposition teilweise überlappen.

8. Verfahren nach einem der vorherigen Ansprüche,
**dadurch gekennzeichnet,**
**dass** als weitere Verfahrensschritte vorgesehen sind:
- Relatives Bewegen des Spritzschutzes (19) gegenüber dem Tauchbecken (14) in eine die Teile umgebende Umwälzposition, in welcher der Spritzschutz (19) zumindest teilweise aus dem Tauchbecken (14) bewegt ist;
- Relatives Verschwenken der Teile und des Spritzschutzes (19) gegenüber dem Tauchbecken; und
- Umwälzen der Teile.

9. Anlage zum Behandeln von Teilen in einer Flüssigkeit, umfassend:
ein Tauchbecken (14), das mit der Flüssigkeit befüllbar ist,
eine um eine Drehachse (X) drehend antreibbare Aufnahmevorrichtung (10) zur Aufnahme der Teile,
wobei die Aufnahmevorrichtung (10) und das Tauchbecken (14) relativ zueinander bewegbar sind, um die Teile in das Tauchbecken (14) einzutauchen und aus diesem herauszuheben, und
einen Spritzschutz (19),
**dadurch gekennzeichnet,**
**dass** eine Hubvorrichtung (18) zum relativen Bewegen des Spritzschutzes (19) gegenüber dem Tauchbecken (14) vorgesehen ist.

10. Anlage nach Anspruch 9,
**dadurch gekennzeichnet,**
**dass** die Hubvorrichtung (18) außen an dem Tauchbecken (14) angeordnet ist.

11. Anlage nach einem der Ansprüche 9 oder 10,
**dadurch gekennzeichnet,**
**dass** eine Tragvorrichtung (11) vorgesehen ist, an welcher der Spritzschutz (19) lösbar befestigbar ist, wobei die Tragvorrichtung (11) relativ zu einem ortfesten Gestell (1) schwenkbar ist.

12. Anlage nach Anspruch 11,
**dadurch gekennzeichnet,**
**dass** eine steuerbare Kupplungsvorrichtung (26) vorgesehen und derart ausgebildet ist, dass der Spritzschutz (19) an der Tragvorrichtung (11) ankoppelbar oder von dieser abkoppelbar ist.

13. Anlage nach Anspruch 12,
**dadurch gekennzeichnet,**
**dass** die Kupplungsvorrichtung (26) einen Kniehebelmechanismus umfasst, um den Spritschutz (19) selbstverriegelnd mit der Tragvorrichtung (11) zu fixieren.

14. Anlage nach einem der Ansprüche 11 bis 13,
**dadurch gekennzeichnet,**
**dass** die Tragvorrichtung (11) mit dem Spritzschutz (19) zusammenwirkende Führungsmittel (43) aufweist, die derart ausgebildet sind, dass der Spritzschutz (19) konzentrisch zur Drehachse (X) an der Tragvorrichtung (11) befestigbar ist.

15. Anlage nach einem der Ansprüche 9 bis 14,
**dadurch gekennzeichnet,**
**dass** der Spritzschutz (19) rohrförmig gestaltet ist und eine größere axiale Längserstreckung aufweist als zumindest eines von dem Tauchbecken (14) und der Aufnahmevorrichtung (10).

16. Anlage nach einem der Ansprüche 9 bis 15,
**dadurch gekennzeichnet,**
**dass** der Spritzschutz (19) in einer Tauchposition zwischen einer umlaufenden Wandung (29) des Tauchbeckens (14) und der Aufnahmevorrichtung (10) für die Teile angeordnet ist.

## Claims

1. Method for treating components with a liquid, comprising the steps:
- providing a splash guard (19) in a dip tank (14) filled with the liquid,
- dipping of components into the liquid,
- moving the components out of the liquid,
- moving the splash guard (19) relative to the dip tank (14) into a centrifuging position surrounding the components, and
- rotating the components within the splash guard (19), and
- moving the splash guard (19) relative to the dip tank (14) into a dipping position.

2. Method according to claim 1,
**characterised in**
**that** the splash guard (19) is arranged in the centrifuging position such, that during rotating the components, centrifuged liquid can drip from the splash guard (19) back into the dip tank (14).

3. Method according to one of the preceding claims,
**characterised in**
**that** the splash guard (19) is held stationary when the components rotate.

4. Method according to one of the preceding claims,
**characterised in**
**that** as a further method step, before rotating the components, it is provided:
- coupling the splash guard (19) to a support device (11).

5. Method according to claim 4,
**characterised in**
**that** as further method steps, after the coupling of the splash guard (19), it is provided:
- recording a signal representing the coupling position, that the splash guard (19) is held on the support device (11),
- transmitting the signal to a control unit.

6. Method according to claim 4 or 5,
**characterised in**
**that** moving the splash guard (19) relative to the dip tank (14) is carried out such, that the support device (11) and the dip tank (14) are moved relative to each other.

7. Method according to one of the preceding claims,
**characterised in**
**that** the splash guard (19) and the dip tank (14) partially overlap each other in the centrifuging position.

8. Method according to one of the preceding claims,
**characterised in**
**that** it is provided as further method steps:
- moving the splash guard (19) relative to the dip tank (14) into a turning position surrounding the components, in which the splash guard (19) is moved at least partially out of the dip tank (14),
- pivoting the components and the splash guard (19) relative to the dip tank, and
- turning the components.

9. Installation for treating components in a liquid, comprising:
a dip tank (14), which is fillable with the liquid,
a receiving device (10) for receiving the components, which is rotatingly drivable around an axis of rotation (X),
wherein the receiving device (10) and the dip tank (14) are movable relative to each other, to dip the components in the dip tank (14) or to lift these out of the dip tank (14), and
a splash guard (19),
**characterised in**
**that** a lifting device (18) is provided for moving the splash guard (19) relative to the dip tank (14).

10. Installation according to claim 9,
**characterised in**
**that** the lifting device (18) is arranged at the outside on the dip tank (14).

11. Installation according to one of claims 9 or 10,
**characterised in**
**that** a support device (11) is provided, on which the splash guard (19) is detachably mountable, wherein the support device (11) is pivotable relative to a stationary frame (1).

12. Installation according to claim 11,
**characterised in**
**that** a controllable coupling device (26) is provided and formed such, that the splash guard (19) can be coupled to or can be decoupled from the support device (11).

13. Installation according to claim 12,
**characterised in**
**that** the coupling device (26) comprises a bent lever mechanism, to fasten the splash guard (19) in a self-locking manner to the support device (11).

14. Installation according to one of claims 11 to 13,
**characterised in**
**that** the support device (11) has guide means (43) interacting with the splash guard (19) and which are formed such, that the splash guard (19) is attachable on the support device (11) concentrically to the axis of rotation (X).

15. Installation according to one of claims 9 to 14,
**characterised in**
**that** the splash guard (19) is formed tubular and has a larger axial longitudinal extension than at least one of the dip tank (14) and the accommodation device (10).

16. Installation according to one of claims 9 to 15,
**characterised in**
**that** the splash guard (19) is arranged in a dipping position between a circumferentially extending wall (29) of the dip tank (14) and the receiving device (10) for the components.

## Revendications

1. Procédé pour le traitement de pièces avec un liquide, comprenant les étapes suivantes :
- la mise à disposition d'une protection contre les projections (19) dans une cuve d'immersion (14) remplie avec le liquide ;
- l'immersion de pièces dans le liquide ;
- le déplacement des pièces hors du liquide ;
- le déplacement relatif de la protection contre les projections (19) par rapport à la cuve d'immersion (14) dans une position de centrifugation entourant les pièces ; et
- la mise en rotation des pièces à l'intérieur de la protection contre les projections (19) ; et
- le déplacement relatif de la protection contre les projections (19) par rapport à la cuve d'immersion (14) dans une position d'immersion.

2. Procédé selon la revendication 1,
**caractérisé en ce que**
la protection contre les projections (19) est disposée dans la position de centrifugation d'une manière telle, que du liquide soumis à centrifugation pendant la rotation des pièces peut s'égoutter à partir de la protection contre les projection (19) en retour dans la cuve d'immersion (14).

3. Procédé selon l'une des revendications précédentes,
**caractérisé en ce que**
la protection contre les projections (19) est maintenue de manière stationnaire pendant la rotation des pièces.

4. Procédé selon l'une des revendications précédentes,
**caractérisé en ce que**
l'on prévoit, en guise d'autre étape du procédé avant la mise en rotation des pièces :
- le couplage de la protection contre les projections (19) avec un dispositif de support (11).

5. Procédé selon la revendication 4,
**caractérisé en ce que**
l'on prévoit, en guise d'autres étapes du procédé après le couplage de la protection contre les projections (19) :
- la détection d'un signal représentant la position de couplage **en ce que** la protection contre les projections (19) est maintenue sur le dispositif de support (11) ;
- la transmission du signal à une unité de commande.

6. Procédé selon la revendication 4 ou 5,
**caractérisé en ce que**
le déplacement relatif de la protection contre les projections (19) par rapport à la cuve d'immersion (14) s'effectue d'une manière telle, que le dispositif de support (11) et la cuve d'immersion (14) sont déplacés l'un par rapport à l'autre.

7. Procédé selon l'une des revendications précédentes,
**caractérisé en ce que**
la protection contre les projections (19) et la cuve d'immersion (14) se superposent partiellement dans la position de centrifugation.

8. Procédé selon l'une des revendications précédentes,
**caractérisé en ce que**
l'on prévoit, en guise d'autres étapes du procédé :
- le déplacement relatif de la protection contre les projections (19) par rapport à la cuve d'immersion (14) dans une position de recirculation entourant les pièces, dans laquelle la protection contre les projections (19) est déplacée au moins partiellement hors de la cuve d'immersion (14) ;
- le pivotement relatif des pièces et de la protection contre les projections (19) par rapport à la cuve d'immersion ; et
- la recirculation des pièces.

9. Installation pour le traitement de pièces dans un liquide, comprenant :
une cuve d'immersion (14) qui peut être remplie avec le liquide,
un dispositif de réception (10) pouvant être entraîné de manière rotative autour d'un axe de rotation (X) pour réceptionner les pièces,
dans laquelle le dispositif de réception (10) et la cuve d'immersion (14) peuvent être déplacés l'un par rapport à l'autre pour immerger les pièces dans la cuve d'immersion (14) et les soulever hors de celle-ci, et
une protection contre les projections (19),
**caractérisée en ce que**
l'on prévoit un dispositif de levage (18) pour le déplacement relatif de la protection contre les projections (19) par rapport à la cuve d'immersion (14).

10. Installation selon la revendication 9,
**caractérisée en ce que**
le dispositif de levage (18) est disposé à l'extérieur sur la cuve d'immersion (14).

11. Installation selon l'une des revendications 9 ou 10,
**caractérisée en ce que**
l'on prévoit un dispositif de support (11) sur lequel la protection contre les projections (19) peut être fixée de manière amovible, dans laquelle le dispositif de support (11) peut pivoter par rapport à un bâti stationnaire (1).

12. Installation selon la revendication 11,
**caractérisée en ce que**
l'on prévoit un dispositif de couplage (26) pouvant être commandé et réalisé d'une manière telle, que la protection contre les projections (19) peut être couplée au dispositif de support (11) ou peut être découplée de celui-ci.

13. Installation selon la revendication 12,
**caractérisée en ce que**
le dispositif de couplage (26) comprend un mécanisme de levier à genouillère pour fixer la protection contre les projections (19) au dispositif de support (11) de manière autoverrouillante.

14. Installation selon l'une des revendications 11 à 13,
**caractérisée en ce que**
le dispositif de support (11) présente des moyens de guidage (43) coopérant avec la protection contre les projections (19) qui sont réalisés d'une manière telle, que la protection contre les projections (19) peut être fixée de manière concentrique à l'axe de rotation (X) sur le dispositif de support (11).

15. Installation selon l'une des revendications 9 à 14,
**caractérisée en ce que**
la protection contre les projections (19) est conçue en forme de tube et présente une étendue longitudinale axiale plus grande qu'au moins l'un(e) d'entre la cuve d'immersion (14) et le dispositif de réception (10).

16. Installation selon l'une des revendications 9 à 15,
**caractérisée en ce que**
la protection contre les projections (19) est disposée dans une position d'immersion entre une paroi périphérique (29) de la cuve d'immersion (14) et le dispositif de réception (10) pour les pièces.
